# EUROPÄISCHE PATENTANMELDUNG

(11) **EP 2 570 276 A1**
(43) Veröffentlichungstag der Anmeldung: **20.03.2013**
(21) Anmeldenummer: 12006304.5
(22) Anmeldetag: 06.09.2012
(51) Int. Cl.: B60G 11/16, B60G 15/06, B60G 13/00

(54) **Federbein und Gehäuse eines Federbeins**

(30) Priorität: 19.09.2011 DE 102011113655; 17.02.2012 DE 102012002806
(71) Anmelder: Carl Freudenberg KG, 69469 Weinheim (DE)
(72) Erfinder: Mess, Michael, 21075 Hamburg (DE); Kardoes, Hilrich, 21423 Winsen/Luhe (DE)

(57) **Zusammenfassung**

Federbein, umfassend ein Gehäuse (1), ein Stützlager (2) und eine Zusatzfeder (3), wobei das Stützlager (2) und die Zusatzfeder (3) in dem Gehäuse (1) angeordnet sind. Das Gehäuse (1) besteht aus einem polymeren Werkstoff und weist einen Stützring (4) und eine erste Aufnahme (5) für die Zusatzfeder (3) auf, wobei die erste Aufnahme (5) die Zusatzfeder (3) stimseitig einerseits aussenumfangsseitig zumindest teilweise anliegend umschließt und wobei die erste Aufnahme (5) auf ihrer der Zusatzfeder (3) radial abgewandten Außenumfangsseite (6) von dem Stützring (4) zumindest teilweise anliegend umschlossen ist.

## Beschreibung

### Technisches Gebiet

Die Erfindung betrifft ein Federbein, umfassend ein Gehäuse, ein Stützlager und eine Zusatzfeder, wobei das Stützlager und die Zusatzfeder in dem Gehäuse angeordnet sind.
Außerdem betrifft die Erfindung ein Gehäuse zur Verwendung in einem Federbein.

### Stand der Technik

Ein Federbein eines Kraftfahrzeugs wird typischerweise über elastische Stützlager sowohl an die Fahrzeugachse wie auch an die Fahrzeugkarosserie angebunden. Diese Stützlager sind oft als Metall-Gummi-Bauteile ausgeführt, die in einem Gehäuse aufgenommen sind, welches wiederum mit der Fahrzeugkarosserie verbunden ist. Zusätzlich wird das Gehäuse genutzt, um die Kräfte einer Tragfeder und einer so genannten Zusatzfeder, die z. B. aus microzellularem Polyurethan besteht, in die Karosserie einzuleiten.

Das Gehäuse, das das Stützlager und die Zusatzfeder aufnimmt sowie ein Widerlager für die Tragfeder bildet, bestand bisher aus Aluminium-Druckguss oder Stahlblech, um eine ausreichende Festigkeit zur Aufnahme der im Federbein wirksamen Kräfte aufzuweisen.

### Darstellung der Erfindung

Der Erfindung liegt die Aufgabe zugrunde, ein Federbein und ein Gehäuse eines Federbeins derart weiterzuentwickeln, dass für das Gehäuse ein von Aluminium-Druckguss oder Stahlblech abweichender Werkstoff zur Anwendung gelangen kann, das Gehäuse eine geringere Masse aufweist und kostengünstiger herstellbar ist und zumindest gleich gute Gebrauchseigenschaften während einer langen Gebrauchsdauer, insbesondere eine gute Haltbarkeit, aufweist.

Diese Aufgabe wird erfindungsgemäß mit den Merkmalen der Ansprüche 1 und 2 gelöst. Auf vorteilhafte Ausgestaltungen nehmen die auf die Ansprüche 1 und 2 rückbezogenen Ansprüche Bezug.

Zur Lösung der Aufgabe ist es vorgesehen, dass das Gehäuse aus einem polymeren Werkstoff besteht und einen Stützring und eine erste Aufnahme für die Zusatzfeder aufweist, wobei die erste Aufnahme die Zusatzfeder stirnseitig einerseits außenumfangsseitig zumindest teilweise anliegend umschließt und wobei die erste Aufnahme auf ihrer der Zusatzfeder radial abgewandten Außenumfangsseite von dem Stützring zumindest teilweise anliegend umschlossen ist.
Bevorzugt umschließt der Stützring die Außenumfangsseite der ersten Aufnahme vollständig anliegend.
Durch eine derartige Ausgestaltung ist von Vorteil, dass das aus einem polymeren Werkstoff bestehende Gehäuse, im Vergleich zu einem entsprechenden Gehäuse aus Aluminium-Druckguss, ein geringeres Gewicht aufweist und kostengünstiger herstellbar ist.

Der Stützring und dessen aussenumfangsseitige Anordnung um die erste Aufnahme sind erforderlich, um in gleicher Art und Weise, wie ein Gehäuse aus Aluminium-Druckguss, Kräfte übertragen zu können. Das mit dem Stützring versehene Gehäuse aus polymerem Werkstoff weist, bezogen auf ein entsprechendes Gehäuse aus Aluminium-Druckguss, keine Nachteile bezüglich der Festigkeit und damit in der Belastbarkeit auf.

Generell besonders kritisch hinsichtlich Festigkeit und Belastbarkeit ist die erste Aufnahme, in der die Zusatzfeder angeordnet ist. Wird die Zusatzfeder während der bestimmungsgemäßen Verwendung auf ihre Blocklänge gestaucht, wirkt auf die erste Aufnahme ein hoher hydrostatischer Druck.
Die Zusatzfeder wird in die erste Aufnahme wie in einen Becher hineingedrückt und versucht, seitlich auszuweichen. Dadurch entsteht ein gleichmäßiger Druck in alle Raumrichtungen.

Durch diesen hydrostatischen Druck ergeben sich häufig hohe Zugspannungen in Umfangsrichtung im Material des Gehäuses. Diese hohen Zugspannungen im Gehäuse, insbesondere im Material, durch das die erste Aufnahme gebildet ist, werden bei dem erfindungsgemäßen Federbein und dem erfindungsgemäßen Gehäuse dadurch vermieden, dass der Stützring die erste Aufnahme außenumfangsseitig stützend umschließt.
Wird die Zusatzfeder nun auf Blocklänge gestaucht, wird der dadurch entstehende hohe hydrostatische Druck durch den Stützring aufgenommen, so dass die aus einem polymeren Werkstoff bestehende erste Aufnahme des Gehäuses nicht beschädigt/zerstört wird.

Durch die Verwendung des Stützrings werden, bezogen auf ein Gehäuse aus Aluminium-Druckguss, Gewicht und Kosten des Gehäuses gesenkt, Festigkeit und Belastbarkeit bleiben demgegenüber unverändert.

Der Stützring kann die erste Aufnahme kraft- und/oder formschlüssig umschließen. Entscheidend ist, wie zuvor bereits ausgeführt, dass die Kräfte, die die gestauchte Zusatzfeder auf die erste Aufnahme ausübt, durch den Stützring aufgenommen werden. Der Stützring kann beispielsweise auf die erste Aufnahme aufgeschoben oder aufgepresst werden, auch besteht die Möglichkeit, den Stützring bei Herstellung des Gehäuses zu umspritzen.

Der Stützring besteht bevorzugt aus einem metallischen Werkstoff. Der Stützring kann beispielsweise aus einem Blech bestehen. Metallische Stützringe sind in der Lage, den polymeren Werkstoff des Gehäuses dadurch zu entlasten, dass sie die betriebsbedingt auftretenden Kräfte aufnehmen. Ein metallischer Stützring ist einfach und kostengünstig herstellbar, leicht und in seinen Abmessungen besonders kompakt. Die Abmessungen eines Gehäuses aus einem polymeren Werkstoff, bei dem die erste Aufnahme von einem Stützring aus einem bevorzugt metallischen Werkstoff umschlossen ist, unterscheiden sich praktisch nicht von den Abmessungen eines entsprechenden Gehäuses aus Aluminium-Druckguss.

Der Stützring weist bevorzugt eine axiale Breite auf, die im Wesentlichen der axialen Breite der ersten Aufnahme entspricht. Hierbei ist von Vorteil, dass die erste Aufnahme entlang ihrer gesamten axialen Breite von dem Stützring vollständig gestützt wird. Im Bereich der ersten Aufnahme gibt es kein polymeres Material, das bei Stauchung der Zusatzfeder und daraus resultierendem hohem hydrostatischen Druck unerwünscht hoch belastet wäre. Das Gehäuse weist dadurch gleichbleibend gute Gebrauchseigenschaften während einer langen Gebrauchsdauer auf.

Das Gehäuse kann auf der der ersten Aufnahme axial abgewandten Seite eine zweite Aufnahme für das Stützlager aufweisen. Sowohl die erste Aufnahme für die Zusatzfeder als auch die zweite Aufnahme für das Stützlager sind in das Gehäuse integriert. Dadurch sind die beiden Aufnahmen einfach und kostengünstig herstellbar. Außerdem ist die Montage wesentlich vereinfacht, weil das Federbein oder das Gehäuse durch eine derartige integrale Ausgestaltung einen besonders teilearmen Aufbau aufweist.

Die erste und die zweite Aufnahme können in axial entgegengesetzter Richtung offen sein. Die Zusatzfeder ragt dabei, ausgehend vom Gehäuse, aus der ersten Aufnahme axial In Richtung der Achse und des Rades. Durch das in der zweiten Aufnahme aufgenommene Stützlager wird das Federbein in der Karosserie gehalten.

Zur Befestigung des Federbeins oder des Gehäuses an der Karosserie kann das Gehäuse einen ringförmigen Befestigungsflansch aufweisen. Der Befestigungsflansch kann dabei eine sich in radialer Richtung erstreckende ringförmige Auflagefläche für eine Schraubenfeder aufweisen. Zur Befestigung an der Karosserie kann der Befestigungsflansch mehrere, bevorzugt zumindest drei gleichmäßig in Umfangsrichtung verteilt angeordnete Durchbrechungen aufweisen, die z. B. von Gewindebolzen in axialer Richtung durchdrungen sind. Auch durch die Einstückigkeit von Befestigungsflansch und Auflagefläche ist das Gehäuse teilearm und leicht sowie einfach und kostengünstig herstellbar.

Der Befestigungsflansch kann, in axialer Richtung betrachtet, zwischen der ersten Aufnahme und der zweiten Aufnahme angeordnet sein. Oftmals ist genau in diesem Bereich ausreichend viel Material vorhanden, um einen haltbaren Befestigungsflansch vorzusehen. Hinsichtlich möglichst gleicher Wandstärken bei Vermeidung unerwünschter Materialanhäufungen ist eine solche Positionierung des Befestigungsflansches, relativ zu den beiden Aufnahmen, von Vorteil.

Die beiden Aufnahmen und der Befestigungsflansch können einstückig und materialeinheitlich ausgebildet sein. Das polymere Gehäuse besteht dadurch nur noch aus zwei Teilen, nämlich dem Tragteil, das durch die beiden Aufnahmen und den Befestigungsflansch gebildet ist, und dem Stützring, der die erste Aufnahme außenumfangsseitig umschließt und die in die erste Aufnahme eingeleiteten Kräfte aufnimmt.

Der Stützring bewirkt eine Funktionstrennung. Die erste Aufnahme ist im Wesentlichen ausschließlich zur Aufnahme der Zusatzfeder vorgesehen, ohne dabei wesentlich Kräfte der Zusatzfeder aufnehmen zu müssen. Die Zugspannungen, die bei Kompression der Zusatzfeder in Umfangsrichtung im Gehäuse entstehen, werden praktisch nicht durch die erste Aufnahme selbst, sondern durch den Stützring aufgenommen, der die erste Aufnahme anliegend umschließt.
Die Anordnung des Stützrings sorgt außerdem dafür, dass das Gehäuse steifer und damit belastbarer für die über das Stützlager in das Gehäuse eingebrachten Kräfte wird. Insbesondere bei Zugbelastung des Stützlagers vermindert der Stützring, der die erste Aufnahme außenumfangsseitig anliegend umschließt, die Durchbiegung des Bodens der zweiten Aufnahme. Das ist hauptsächlich darauf zurückzuführen, dass die Durchbiegung des Bodens der zweiten Aufnahme durch die Geometrie des Gehäuses hebelartig auf eine radiale Aufweitung der ersten Aufnahme übersetzt wird. Dieser radialen Aufweitung wirkt der Stützring entgegen.

### Kurzbeschreibung der Zeichnung

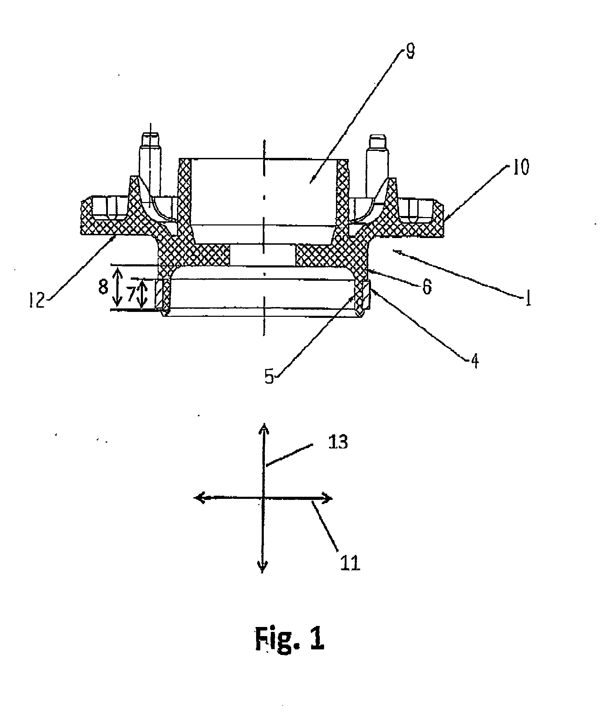

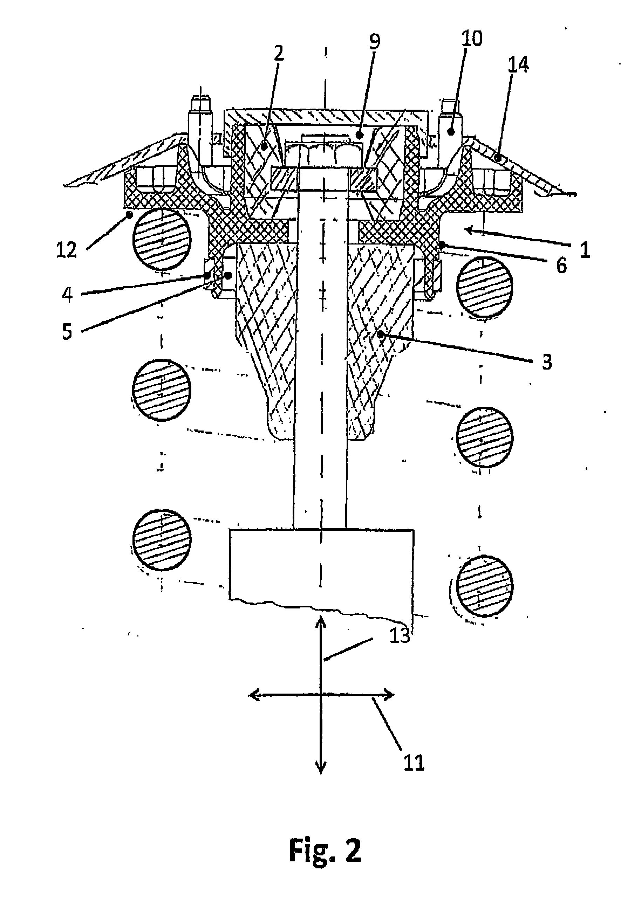

Ein Ausführungsbeispiel des erfindungsgemäßen Gehäuses wird nachfolgend anhand der Figuren 1 und 2 näher beschrieben.

Diese zeigen jeweils in schematischer Darstellung:
Fig. 1 einen Schnitt durch ein erfindungsgemäßes Gehäuse,
Fig. 2 das Gehäuse aus den Fig. 1, das einen Bestandteil eines Federbeins bildet und mit der Karosserie eines Kraftfahrzeugs verschraubt ist.

### Ausführung der Erfindung

In Fig. 1 ist ein Ausführungsbeispiel des erfindungsgemäßen Gehäuses 1 zur Verwendung in einem Federbein eines Kraftfahrzeugs gezeigt.
Das Gehäuse 1 besteht aus einem polymeren Werkstoff und weist eine erste Aufnahme 5 für die in Fig. 3 dargestellte Zusatzfeder 3 des Federbeins und eine zweite Aufnahme 9 für das ebenfalls in Fig. 3 dargestellte Stützlager 2 auf. Die erste Aufnahme 5 und die zweite Aufnahme 9 sind einander in axialer Richtung benachbart und koaxial zugeordnet. Die erste Aufnahme 5 hat eine Außenumfangsseite 6, die von einem in sich geschlossen ausgebildeten Stützring 4 anliegend vollständig umschlossen ist. Der Stützring 4 besteht in dem hier gezeigten Ausführungsbeispiel aus einem metallischen Werkstoff. Der Stützring 4 ist auf die Außenumfangsseite 6 der ersten Aufnahme 5 aufgepresst.
Der Stützring 4 hat die Aufgabe, während der bestimmungsgemäßen Verwendung des Gehäuses 1 Kräfte aufzunehmen, die durch die in Funktion befindliche Zusatzfeder 3 entstehen und ohne den Stützring 4 von dem Gehäuse 1 im Bereich der ersten Aufnahme 5 aufgenommen werden müsste.

Die axiale Breite 7 des Stützrings 4 und die axiale Breite 8 der ersten Aufnahme 5 sind im Wesentlichen übereinstimmend, so dass das Gehäuse 1 im Bereich der axialen Aufnahme 5 durch den Stützring 4 vollständig vor unerwünscht hohen mechanischen Belastungen und/oder einer Zerstörung geschützt ist

Die beiden Aufnahmen 5, 9 und auch der ringförmige Befestigungsflansch 10 sind einstückig ineinander übergehend und materialeinheitlich ausgebildet und bestehen aus einem polymeren Werkstoff.
Bedarfsweise kann der Befestigungsflansch 10 eine Auflagefläche 12 für eine Schraubenfeder aufweisen.

In Fig. 2 ist ein Federbein gezeigt, das das Gehäuse 1 umfasst und mit der Karosserie 14 verschraubt ist.
In der zweiten Aufnahme 9 ist das Stützlager 2 angeordnet, in der ersten Aufnahme 5 die Zusatzfeder 3, die aus einem mikrozellularen Polyurethan besteht. Auf ihrer der ersten Aufnahme 5 zugewandten Stirnseite ist die Zusatzfeder 3 unter elastischer Vorspannung in der ersten Aufnahme 5 des Gehäuses 1 angeordnet. Stirnseitig andererseits weist die Zusatzfeder 3 eine biegeweiche und umlaufende Lippe auf, die ein weiches Anlaufen der Zusatzfeder 3 bewirkt.
Wird die Zusatzfeder in extremen Fahrsituationen auf ihre Blocklänge gestaucht, wirkt auf die erste Aufnahme 5 ein hoher hydrostatischer Druck, der ohne den Stützring 4 hohe Zugspannungen in Umfangsrichtung im Material des Gehäuses 1 im Bereich der ersten Aufnahme 5 bewirken würde.
Der Stützring 4 nimmt die durch die gestauchte Zusatzfeder 3 entstehenden Spannungen im Wesentlichen vollständig auf und entlastet dadurch das polymere Material, aus dem das Gehäuse 1 besteht.
Im Bereich der ersten Aufnahme 5 des Gehäuses 1 ergibt sich somit eine Funktionstrennung. Die erste Aufnahme 5 nimmt die Zusatzfeder 3 auf, ohne die durch die Zusatzfeder 3 auftretenden Kräfte aufnehmen zu müssen; der Stützring 4 nimmt die Kräfte auf, die durch die Stauchung der Zusatzfeder 3 entstehen, ohne jedoch die Zusatzfeder 3 aufnehmen zu müssen. Durch diese Funktionstrennung kann die Werkstoffauswahl für das Gehäuse 1 gewichtsoptimal an die jeweilige Beanspruchung angepasst vorgenommen werden.
Durch den Stützring 4 ist das Gehäuse 1 steifer und belastbarer auch für die über das Stützlager 2 eingebrachten Kräfte. Insbesondere bei Zugbelastung des Stützlagers 2 vermindert der Stützring 4 an der ersten Aufnahme 5 die Durchbiegung des Bodens der zweiten Aufnahme 9.

## Patentansprüche

1. Federbein, umfassend ein Gehäuse (1), ein Stützlager (2) und eine Zusatzfeder (3), wobei das Stützlager (2) und die Zusatzfeder (3) in dem Gehäuse (1) angeordnet sind, **dadurch gekennzeichnet, dass** das Gehäuse (1) aus einem polymeren Werkstoff besteht und einen Stützring (4) und eine erste Aufnahme (5) für die Zusatzfeder (3) aufweist, dass die erste Aufnahme (5) die Zusatzfeder (3) stirnseitig einerseits aussenumfangsseitig zumindest teilweise anliegend umschließt und dass die erste Aufnahme (5) auf ihrer der Zusatzfeder (3) radial abgewandten Außenumfangsseite (6) von dem Stützring (4) zumindest teilweise anliegend umschlossen ist.

2. Gehäuse zur Verwendung in einem Federbein nach Anspruch 1, **dadurch gekennzeichnet, dass** das Gehäuse (1) aus einem polymeren Werkstoff besteht und einen Stützring (4) und eine erste Aufnahme (5) für eine Zusatzfeder (3) des Federbeins umfasst und dass die erste Aufnahme (5) aussenumfangsseitig von dem Stützring (4) zumindest teilweise anliegend umschlossen ist.

3. Federbein oder Gehäuse nach einem der Ansprüche 1 oder 2, **dadurch gekennzeichnet, dass** der Stützring (4) die erste Aufnahme (5) kraft- und/oder formschlüssig umschließt.

4. Federbein oder Gehäuse nach einem der Ansprüche 1 bis 3, **dadurch gekennzeichnet, dass** der Stützring (4) aus einem metallischen Werkstoff besteht.

5. Federbein oder Gehäuse nach einem der Ansprüche 1 bis 4, **dadurch gekennzeichnet, dass** der Stützring (4) eine axiale Breite (7) aufweist, die im Wesentlichen der axialen Breite (8) der ersten Aufnahme (5) entspricht.

6. Federbein oder Gehäuse nach einem der Ansprüche 1 bis 5, **dadurch gekennzeichnet, dass** das Gehäuse (1) auf der der ersten Aufnahme (5) axial abgewandten Seite eine zweite Aufnahme (9) für das Stützlager (2) aufweist.

7. Federbein oder Gehäuse nach einem der Ansprüche 1 bis 6, **dadurch gekennzeichnet, dass** die erste (5) und die zweite Aufnahme (9) in axial entgegengesetzter Richtung offen sind.

8. Federbein oder Gehäuse nach einem der Ansprüche 1 bis 7, **dadurch gekennzeichnet, dass** das Gehäuse (1) einen ringförmigen Befestigungsflansch (10) zur Befestigung an einer Karosserie aufweist.

9. Federbein oder Gehäuse nach Anspruch 8, **dadurch gekennzeichnet, dass** der Befestigungsflansch (10) eine sich in radialer Richtung (11) erstreckende ringförmige Auflagefläche (12) für eine Schraubenfeder aufweist.

10. Federbein oder Gehäuse nach einem der Ansprüche 8 oder 9, **dadurch gekennzeichnet, dass** der Befestigungsflansch (10), in axialer Richtung (13) betrachtet, zwischen der ersten Aufnahme (5) und der zweiten Aufnahme (9) angeordnet ist.

11. Federbein oder Gehäuse nach einem der Ansprüche 1 bis 10, **dadurch gekennzeichnet, dass** die beiden Aufnahmen (5, 9) und der Befestigungsflansch (10) einstückig und materialeinheitlich ausgebildet sind.
